(19) **Europäisches Patentamt / European Patent Office / Office européen des brevets**

(11) **EP 2 664 020 B1**

(12) **FASCICULE DE BREVET EUROPEEN**

(45) Date de publication et mention
de la délivrance du brevet:
**12.11.2014 Bulletin 2014/46**

(21) Numéro de dépôt: **12700190.7**

(22) Date de dépôt: **12.01.2012**

(51) Int Cl.:
***H01M 8/04*** *(2006.01)*

(86) Numéro de dépôt international:
**PCT/EP2012/050449**

(87) Numéro de publication internationale:
**WO 2012/095495 (19.07.2012 Gazette 2012/29)**

(54) **DISPOSITIF DE RÉGULATION DE PRESSION POUR UN SYSTÈME DE PILE À COMBUSTIBLE**

DRUCKREGELVORRICHTUNG FÜR EIN BRENNSTOFFZELLENSYSTEM

PRESSURE REGULATION DEVICE FOR A FUEL CELL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.01.2011 FR 1150305**

(43) Date de publication de la demande:
**20.11.2013 Bulletin 2013/47**

(73) Titulaire: **Areva Stockage d'Energie
13547 Aix-en-Provence (FR)**

(72) Inventeur: **GENESTON, Thierry
F-84300 Cavaillon (FR)**

(74) Mandataire: **Domenego, Bertrand
Cabinet Lavoix
2, place d'Estienne d'Orves
75441 Paris Cedex 09 (FR)**

(56) Documents cités:
**DE-A1- 10 200 058     JP-A- 2005 339 847**

Printed by Jouve, 75001 PARIS (FR)

## Description

La présente invention concerne un dispositif de régulation de pression dans un système de pile à combustible du type comprenant au moins une pile à combustible, un circuit d'alimentation de la ou chaque pile à combustible en fluide oxydant, et un circuit d'alimentation de la ou chaque pile à combustible en fluide réducteur, chaque circuit d'alimentation comportant un conduit amont d'arrivée du fluide et au moins un conduit aval de raccordement à une pile à combustible, le dispositif de régulation de pression équipant au moins un circuit d'alimentation pour réguler la pression de fluide dans la ou chaque pile à combustible.

Un tel dispositif de régulation de pression est destiné à réguler la pression dans les conduits anodiques et cathodiques des cellules entrant dans la composition des piles à combustible du système de pile à combustible, de façon à optimiser le rendement desdites piles à combustible.

De tels dispositifs de régulation de pression sont connus, par exemple du document US 2004/0081864. Ce document décrit un système de pile à combustible comprenant un dispositif de régulation de pression intercalé entre un réservoir de fluide réducteur et un conduit d'alimentation en fluide d'un compartiment anodique d'une pile à combustible.

De façon à réguler précisément la pression dans les conduits anodiques et cathodiques, les dispositifs de régulation de pression utilisés sont généralement constitués d'électrovannes. Or de tels dispositifs s'avèrent extrêmement coûteux lorsqu'il s'agit de faire passer un fort débit de fluide, comme dans le cas de systèmes de pile à combustible comprenant un grand nombre de piles à combustibles raccordées en parallèle fluidique.

Un objectif de l'invention est donc de fournir un dispositif de régulation de pression à coût réduit.

A cet effet, l'invention a pour objet un dispositif de régulation de pression du type précité, caractérisé en ce que le dispositif de régulation de pression comprend une jonction amont reliant fluidiquement le conduit amont d'un premier circuit d'alimentation à une première ligne de pilotage de la pression de fluide et à une deuxième ligne de passage du fluide, la première ligne comportant un premier régulateur de pression disposé entre une portion amont et une portion aval de la première ligne, et la deuxième ligne comportant un deuxième régulateur de pression disposé entre une portion amont et une portion aval de la deuxième ligne, la portion aval de la deuxième ligne étant raccordée fluidiquement au ou à chaque conduit aval dudit premier circuit d'alimentation, et en ce que :

- le dispositif de régulation de pression comprend un capteur de la pression de fluide dans la deuxième ligne, en aval du deuxième régulateur de pression, et le premier régulateur de pression est propre à réguler la pression dans la portion aval de la première ligne en fonction de la pression au niveau du capteur de pression, et en ce que

- le deuxième régulateur de pression est propre à équilibrer la pression dans la portion aval de la deuxième ligne avec une première pression de référence, captée au niveau d'un premier point de captage situé sur la portion aval de la première ligne.

Dans des modes particuliers de réalisation de l'invention, le dispositif de régulation de pression selon l'invention comprend également l'une ou plusieurs des caractéristiques suivantes, prises isolément ou suivant toute(s) combinaison(s) techniquement possible(s) :

- la portion aval de la première ligne est raccordée fluidiquement à la portion aval de la deuxième ligne, au niveau d'une jonction aval ;
- le capteur de pression est adapté pour mesurer la pression de fluide en aval de la jonction aval;
- la portion aval de la première ligne comprend un dispositif anti-retour pour empêcher une remontée de fluide de la jonction aval vers le premier régulateur de pression ;
- la portion aval de la première ligne comprend un dispositif de réduction de pression , pour réduire la pression de fluide entre l'amont et l'aval dudit dispositif ;
- le dispositif de réduction de pression est disposé en amont du dispositif anti-retour ;
- le premier point de captage est placé en amont du dispositif de réduction de pression ;
- le dispositif comporte au moins un troisième régulateur de pression, pour réguler la pression dans le ou chaque conduit aval du deuxième circuit d'alimentation, ledit troisième régulateur de pression étant propre à équilibrer la pression dans le ou chaque conduit aval du deuxième circuit d'alimentation avec une deuxième pression de référence captée au niveau d'un deuxième point de captage, situé en aval du deuxième régulateur de pression ;
- le troisième régulateur de pression est unique et est placé en amont du ou de chaque conduit aval du deuxième circuit d'alimentation, le deuxième point de captage étant placé sur la portion aval de la deuxième ligne ;
- le dispositif comprend une pluralité de troisièmes régulateurs de pression, chaque troisième régulateur de pression étant disposé sur un conduit aval du deuxième circuit d'alimentation, chaque deuxième point de captage étant placé sur un conduit aval du premier circuit d'alimentation, lesdits conduits aval alimentant la même pile à combustible.

D'autres caractéristiques et avantage de l'invention apparaîtront à la lecture de la description qui va suivre, donnée uniquement à titre d'exemple et faite en se référant aux dessins annexés, sur lesquels :

- la Figure 1 est un schéma représentant un système de pile à combustible comprenant un dispositif de régulation de pression selon l'invention,
- la Figure 2 est une coupe schématique d'une cellule d'une pile à combustible du système de la Figure 1,
- la Figure 3 est une coupe schématique d'un premier régulateur de pression du dispositif de régulation de pression de la Figure 1,
- la Figure 4 est une coupe schématique d'un deuxième régulateur de pression du dispositif de régulation de pression de la Figure 1, et
- la Figure 5 est un schéma présentant une variante du système de pile à combustible de la Figure 1.

On notera que, dans la suite, les termes « amont » et « aval » sont à entendre par rapport au sens d'écoulement des fluides à travers les différents éléments du système de pile à combustible 10.

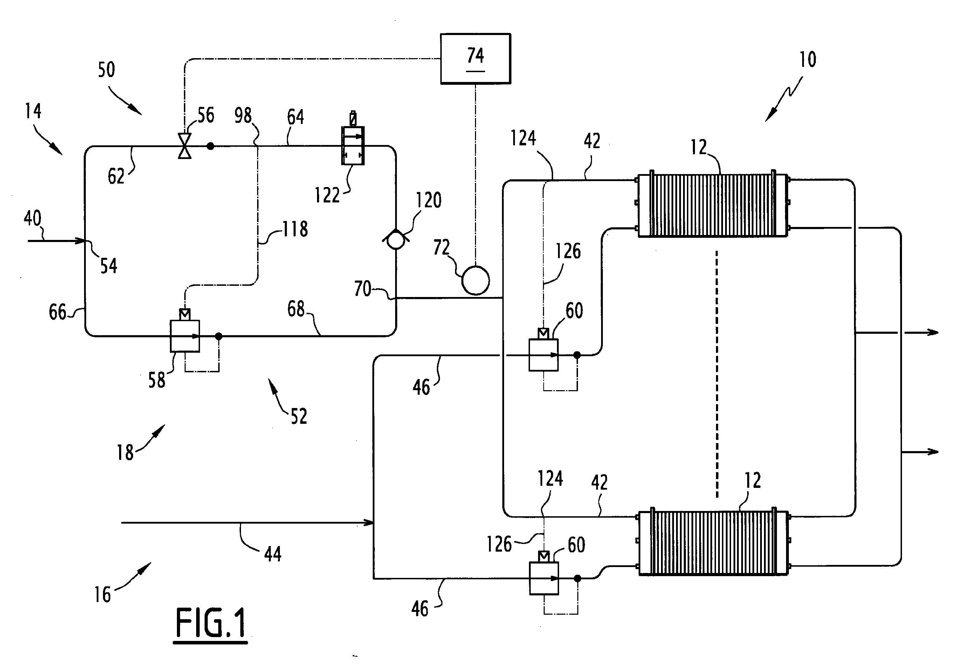

Le système de pile à combustible 10, représenté sur la Figure 1, comprend une pluralité de piles à combustible 12, un circuit 14 d'alimentation des piles à combustible 12 en fluide oxydant, un circuit 16 d'alimentation des piles à combustible 12 en fluide réducteur, et un dispositif de régulation de pression 18, pour réguler la pression en fluides oxydant et réducteur dans les piles à combustible 12.

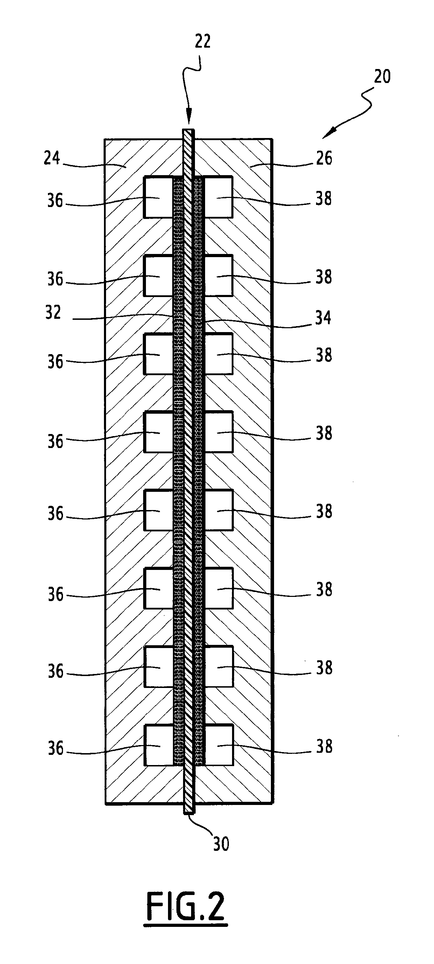

Chaque pile à combustible 12 est formée par un empilement d'une pluralité de cellules. Une de ces cellules, référencée 20, est représentée sur la Figure 2.

Comme visible sur la Figure 2, la cellule 20 comprend un assemblage membrane-électrode 22 intercalé entre une plaque anodique 24 et une plaque cathodique 26.

L'assemblage membrane-électrode 22 comprend une membrane 30 d'échange d'ions prise en sandwich entre une anode 32 et une cathode 34.

La membrane 30 isole électriquement l'anode 32 de la cathode 34.

La membrane 30 est adaptée pour ne laisser que des ions chargés, de préférence des cations, la traverser. La membrane 30 est généralement une membrane d'échange de protons, adaptée pour ne laisser que des protons la traverser. La membrane 30 est typiquement en matériau polymère.

L'anode 32 et la cathode 34 comprennent chacune un catalyseur, typiquement du platine ou un alliage de platine, pour faciliter la réaction.

La plaque anodique 24 délimite un conduit anodique 36 pour la circulation d'un fluide réducteur le long de l'anode 32 et en contact avec celle-ci. Pour ce faire, la plaque 24 est munie d'au moins un canal ménagé dans la face de la plaque tournée vers l'assemblage membrane-électrode 24 et refermé par ledit assemblage membrane électrode 22. La plaque anodique 24 est formée d'un matériau conducteur électriquement, typiquement du graphite ou un composite à base de graphite. Le fluide réducteur utilisé est typiquement un fluide comprenant des atomes d'hydrogène, comme par exemple du dihydrogène pur ou du méthane.

La plaque cathodique 26 délimite un conduit cathodique 38 pour la circulation d'un fluide oxydant le long de la cathode 34 et en contact avec celle-ci. Pour ce faire, la plaque 26 est munie d'au moins un canal ménagé dans la face de la plaque tournée vers l'assemblage membrane-électrode 22 et refermé par ledit assemblage membrane-électrode 22. La plaque cathodique 26 est formée d'un matériau conducteur électriquement, typiquement du graphite ou un composte à base de graphite. Le fluide oxydant utilisé est typiquement un fluide comprenant du dioxygène, comme par exemple du dioxygène pur ou de l'air.

La membrane 30 sépare les fluides oxydant et réducteur. Elle est disposée entre la plaque anodique 24 et la plaque cathodique 24 de la cellule 20 et isole celles-ci électriquement l'une de l'autre.

C'est au niveau de l'anode 32 qu'a lieu l'oxydation du fluide réducteur et que les électrons et les protons sont générés. Les électrons transitent ensuite via la plaque anodique 24 vers la cathode 34 de la cellule 20, ou vers la cathode d'une autre cellule, pour participer à la réduction du fluide oxydant.

Dans les piles à combustible 12, la plaque anodique 24 de chaque cellule est en contact avec la plaque cathodique 26 de la cellule voisine.

De retour à la Figure 1, le circuit 14 d'alimentation des piles à combustible 12 en fluide oxydant comporte un conduit amont 40 d'arrivée de fluide oxydant et une pluralité de conduits aval 42 de raccordement à chaque pile à combustible 12. Les conduits amont 40 et aval 42 sont raccordés fluidiquement l'un à l'autre, et chaque conduit aval 42 est raccordé fluidiquement aux conduits cathodiques des cellules d'une pile à combustible 12.

De même, le circuit 16 d'alimentation des piles à combustible 12 en fluide réducteur comporte un conduit amont 44 d'arrivée de fluide réducteur et une pluralité de conduits aval 46 de raccordement à chaque pile à combustible 12. Les conduits amont 44 et aval 46 sont raccordés fluidiquement l'un à l'autre, et chaque conduit aval 46 est raccordé fluidiquement aux conduits anodiques des cellules d'une pile à combustible 12.

Le dispositif de régulation de pression 18 équipe chacun des circuits d'alimentation en fluide oxydant 14 et en fluide réducteur 16. Il comprend une première ligne 50 de pilotage de la pression de fluide, une deuxième ligne 52 de passage de fluide, raccordée fluidiquement à chaque conduit aval 42 du circuit d'alimentation en fluide oxydant 14, une jonction amont 54 raccordant fluidiquement le conduit amont 40 du circuit d'alimentation 14 à la première 50 et à la deuxième 52 lignes, et une pluralité de régulateurs de pression 56, 58, 60.

La première ligne 50 comporte un premier régulateur de pression 56 disposé entre une portion amont 62 et une portion aval 64 de la première ligne 50. La deuxième ligne 52 comporte un deuxième régulateur de pression 58 disposé entre une portion amont 66 et une portion aval 68 de la deuxième ligne 52.

La portion amont 62 de la première ligne 50 et la portion amont 66 de la deuxième ligne 52 sont raccordées fluidiquement l'une à l'autre au niveau de la jonction amont 54. La portion aval 64 de la première ligne 50 et la portion aval 68 de la deuxième ligne 52 sont raccordées fluidiquement l'une à l'autre au niveau d'une jonction aval 70.

Le dispositif de régulation de pression 18 comprend un capteur de pression 72 pour mesurer la pression de fluide en aval du deuxième régulateur de pression 58. En particulier, le capteur de pression 72 est disposé sur la partie aval 68 de la deuxième ligne 52, en aval de la jonction aval 70, pour mesurer la pression en aval de ladite jonction 70. Le premier régulateur de pression 56 est adapté pour réguler la pression dans la portion aval 64 de la première ligne en fonction de la pression mesurée par ledit capteur de pression 72.

A cet effet, le dispositif de régulation de pression 18 comprend un module de commande 74 pour piloter le premier régulateur de pression 56 en fonction de la pression mesurée par le capteur de pression 72. Le premier régulateur de pression 56 est typiquement une électrovanne et le module de commande 74 est adapté pour commander l'ouverture et la fermeture de l'électrovanne 56 en fonction de la pression mesurée par le capteur de pression 72.

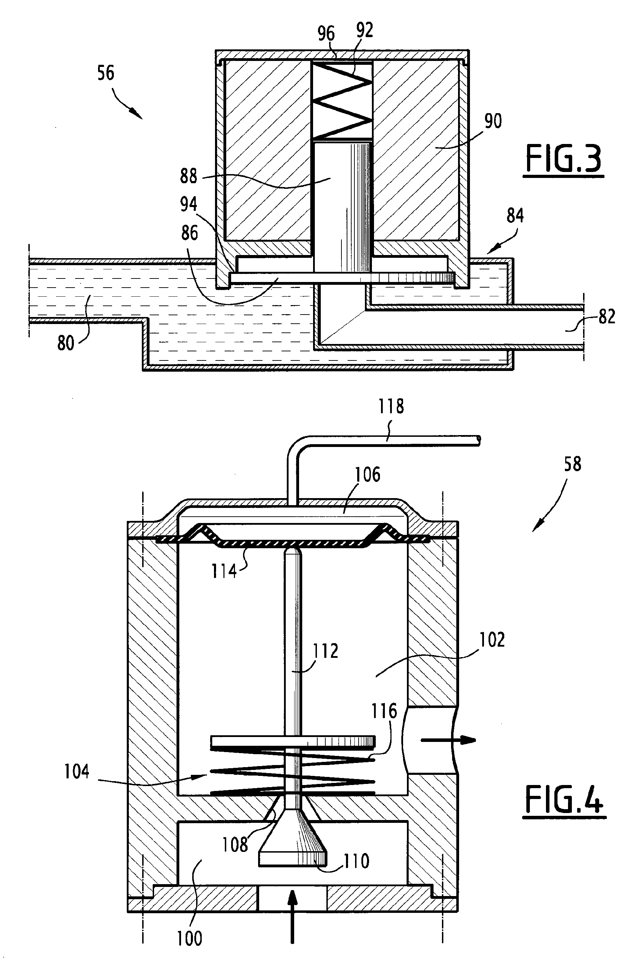

Un exemple de réalisation de l'électrovanne 56 est présenté sur la Figure 3.

Comme visible sur la Figure 3, l'électrovanne 56 comprend une première entrée de fluide 80, raccordée fluidiquement à la portion amont 62 de la première ligne 50, une première sortie de fluide 82, raccordée fluidiquement à la portion aval 64 de la première ligne 50, et un premier dispositif 84 de mise en communication fluidique de la première entrée 80 avec la première sortie 82, piloté par le module de commande 74.

Le premier dispositif de mise en communication fluidique 84 comprend une membrane 86, un barreau métallique 88, attaché au centre de la membrane 86, un solénoïde 90, s'étendant autour du barreau 88, et un dispositif de rappel 92.

La membrane 86 est réalisée en un matériau étanche aux fluides. Elle est fixée, par exemple collée, le long de ses bords, à un siège 94. Elle présente une certaine élasticité.

Le barreau 88 est en matériau magnétique. Il s'étend à l'intérieur d'une cavité 96 allongée dans une direction longitudinale. Le barreau 88 est adapté pour se déplacer longitudinalement dans la cavité 96 entre une position de repos, dans laquelle la membrane 86 obture la première sortie 82, et une position de mise en communication fluidique, dans laquelle la membrane 86 est à l'écart de la première sortie 82 et la première entrée 80 et la première sortie 82 sont en communication fluidique.

Sur la Figure 3, le barreau 88 est représenté dans sa position de repos.

Le dispositif de rappel 92 est adapté pour exercer une force de rappel sur le barreau 88, de façon à le ramener à sa position de repos. Le dispositif de rappel est typiquement un ressort.

Le solénoïde 90 s'étend autour de la cavité 96. Il est adapté pour générer un champ magnétique sous l'effet d'un courant électrique le parcourant, de façon à déplacer le barreau 88 de sa position de repos vers sa position de mise en communication fluidique. Le module de commande 74 est adapté pour piloter le courant parcourant le solénoïde 90.

A la membrane 86 peut être substitué une bille ou tout autre dispositif adapté pour obturer la première sortie 82.

De retour à la Figure 1, le deuxième régulateur de pression 58 est propre à équilibrer la pression dans la portion aval 68 de la deuxième ligne 52 avec une première pression de référence, captée au niveau d'un premier point de captage 98 situé sur la portion aval 64 de la première ligne 50. Par « équilibrer » on entend que, quelle que soit la valeur de la première pression de référence, la pression dans la portion aval 68 est une fonction affine, de pente unitaire, de la pression de référence. En d'autres termes :

$$\forall P_{ref1}, P_{L2} = P_{ref1} - \Delta P, \Delta P \in \Re^+$$

Où $P_{ref1}$ est la première pression de référence, $P_{L2}$ est la pression dans la portion aval 68, et $\Delta P$ est ledit différentiel de pression prédéterminé. On notera que le différentiel de pression $\Delta P$ peut être nul, et que la pression dans la portion aval $P_{L2}$ est alors égale à la pression de référence $P_{ref1}$.

Le deuxième régulateur de pression 58 est de préférence un détendeur.

Un exemple de réalisation du détendeur 58 est présenté sur la Figure 4. Comme visible sur cette Figure, le détendeur 58 comprend une deuxième entrée de fluide 100, raccordée fluidiquement à la portion amont 66 de la deuxième ligne 52, une deuxième sortie de fluide 102, raccordée fluidiquement à la portion aval 68 de la deuxième ligne 52, un deuxième dispositif 104 de mise en communication fluidique de la deuxième entrée de fluide 100 avec la deuxième sortie de fluide 102, et une chambre 106 de fluide.

Le deuxième dispositif de mise en communication fluidique 104 comprend un canal 108 reliant la deuxième entrée 100 à la deuxième sortie 102, et un dispositif 110 d'obturation du canal 108, par exemple une bille, déplaçable entre une position d'obturation, dans laquelle il obture le canal 108, et une position de mise en communication fluidique, dans laquelle le dispositif 110 est à l'écart du canal 108.

Le dispositif 110 est solidaire d'une tige 112, elle-même solidaire du centre d'une membrane 114 de séparation de la chambre 106 et de la deuxième sortie de fluide 102.

La membrane 114 est fixée le long de ses bords et est adaptée pour se déformer en fonction d'une différence de pression existant entre la pression de fluide dans la chambre 106 et la pression de fluide dans la deuxième sortie 102.

Un dispositif de rappel 116, typiquement un ressort, est également prévu pour exercer une force de rappel sur la tige 112, de façon à contrer la force exercée par le fluide de la chambre 106 sur la membrane 114.

Lorsque la somme de la pression dans la deuxième sortie de fluide 102 et de la pression exercée par la force de rappel sur la membrane 114 est inférieure à la pression de fluide dans la chambre 106, la membrane 114 est déformée vers la deuxième sortie 102 et le dispositif d'obturation 110 est dans sa position de mise en communication fluidique. Lorsque la somme de la pression dans la deuxième sortie de fluide 102 et de la pression exercée par la force de rappel sur la membrane 114 est sensiblement égale à la pression de fluide dans la chambre 106, la membrane 114 est déformée vers la chambre 106 et le dispositif d'obturation 110 est dans sa position d'obturation.

La chambre 106 est raccordée fluidiquement, via une première ligne de captage 118, au premier point de captage 98. Ainsi, la pression de fluide dans la chambre 106 est sensiblement égale à la première pression de référence.

De retour à la Figure 1, la portion aval 64 de la première ligne 50 comprend également un dispositif anti-retour 120, disposé entre la jonction aval 70 et le premier régulateur de pression 56, et un dispositif de réduction de pression 122, disposé en amont du dispositif anti-retour 120 et en aval du premier point de captage 98.

Le dispositif anti-retour 120 est typiquement un clapet anti-retour. Il est adapté pour empêcher une remontée de fluide de la jonction aval 70 vers le premier régulateur de pression 56.

Le dispositif de réduction de pression 122 est adapté pour réduire la pression de fluide dans la partie aval 64 de la première ligne 50, entre l'amont et l'aval dudit dispositif 122. Le dispositif de réduction de pression 122 est de préférence une vanne manuelle de réglage, ou éventuellement une électrovanne pilotée par le module de commande 74. En variante, le dispositif de réduction de pression 122 est une bague ou un diaphragme disposé dans la partie aval 64 de la première ligne 50, pour réduire localement le diamètre de la section de la partie aval 64.

Le dispositif de régulation de pression 18 comprend également une pluralité de troisièmes régulateurs de pression 60, pour réguler la pression de fluide réducteur dans chaque conduit aval 46 du circuit d'alimentation en fluide réducteur 16. Chaque troisième régulateur de pression 60 est propre à équilibrer la pression dans un conduit aval 46 avec une deuxième pression de référence, captée au niveau d'un deuxième point de captage 124, situé en aval du deuxième régulateur de pression 58.

Les troisièmes régulateurs de pression 60 sont de préférence des détendeurs similaires au détendeur 58.

Comme visible sur la Figure 1, chaque troisième régulateur de pression 60 est disposé sur un conduit aval 46 du circuit d'alimentation 16 et comprend une deuxième ligne de captage 126, pour capter la deuxième pression de référence au niveau d'un deuxième point de captage 124 placé sur un conduit aval 42 du circuit d'alimentation 14 alimentant la même pile à combustible 12 que celle alimentée par le conduit aval 46 sur lequel est disposé le troisième régulateur de pression 60.

Cette solution permet un ajustement précis de la pression de fluide réducteur dans chaque pile à combustible 12 en fonction de la pression de fluide oxydant dans la pile à combustible 12.

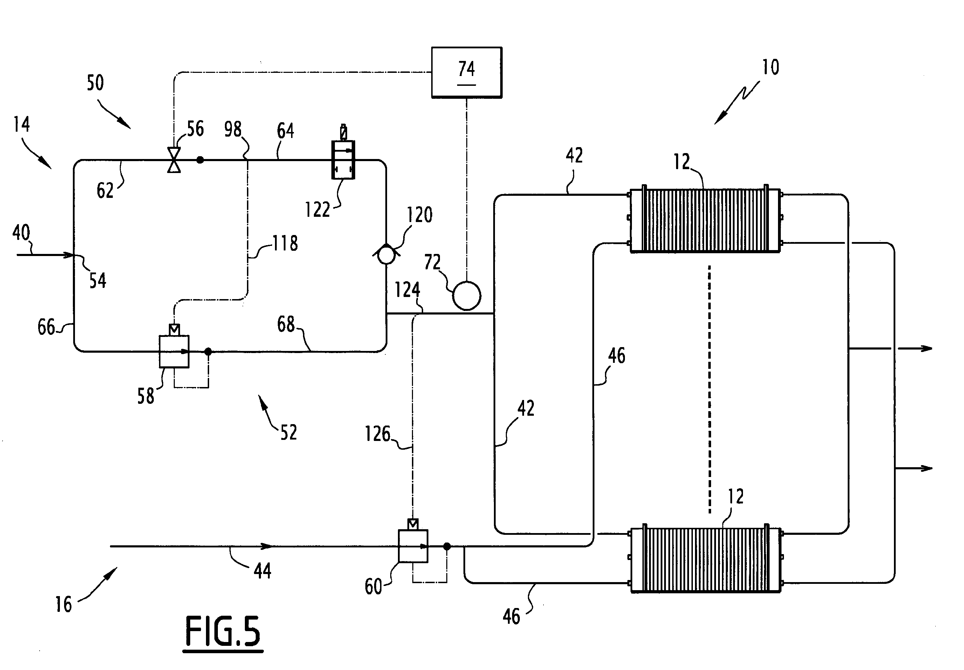

En variante, comme représenté sur la Figure 5, le dispositif de régulation de pression 18 comprend un unique troisième régulateur de pression 60. Celui-ci est alors placé en amont des conduits aval 46 du deuxième circuit d'alimentation 16, sur le conduit amont 44, et le deuxième point de captage 124 est placé sur la portion aval 68 de la deuxième ligne 52, de préférence en aval de la jonction aval 70.

Cette variante permet de réduire le coût du système, un unique troisième régulateur de pression étant utilisé pour réguler la pression dans l'ensemble des piles à combustible, au lieu d'un troisième régulateur de pression par pile à combustible.

On conçoit donc aisément que, grâce à l'invention, le dispositif de régulation de pression est particulièrement peu onéreux. En effet, le volume de fluide passant par la première ligne 50 est faible, l'essentiel du débit de fluide passant par la deuxième ligne 52. Il est ainsi possible de n'utiliser qu'une électrovanne à faible débit, peu coûteuse.

En outre, les autres régulateurs de pression utilisés dans le dispositif de régulation de pression sont des détendeurs, pour lesquels il est possible d'atteindre des débits élevés à faible coût.

De plus, du fait que les portions aval de la première et de la deuxième lignes sont raccordées fluidiquement, il est possible, en phase de dépressurisation des piles à combustible, comme lors de phases d'arrêt ou de baisse de la puissance électrique demandée aux piles à combustible, au cours desquelles la pression peut devenir temporairement supérieure à la valeur de consigne, de recycler le fluide présent dans la première ligne en le réinjectant dans la deuxième ligne à travers la jonction aval.

Enfin, le dispositif de réduction de pression permet de compenser les imperfections du deuxième régulateur de pression 58, en réduisant la pression en sortie de la première ligne de façon à ce que la pression de fluide en sortie de la première ligne soit égale à la pression de fluide dans la portion aval de la deuxième ligne.

On notera que, dans la description donnée ci-dessus, les première et deuxième lignes 50, 52 sont raccordées au circuit d'alimentation en fluide oxydant 14 et les troisièmes régulateurs de pression 60 sont placés sur le circuit d'alimentation en fluide réducteur 16. Cependant cette caractéristique ne saurait être limitative et, en variante, les première et deuxième lignes 50, 52 peuvent être raccordées au circuit d'alimentation en fluide réducteur 16, les troisièmes régulateurs de pression 60 étant alors placés sur le circuit d'alimentation en fluide oxydant 14.

En variante encore, le dispositif de régulation de pression 18 comprend deux systèmes tels que le système formé par les première et deuxième lignes 50, 52, un système étant raccordé au circuit d'alimentation en fluide oxydant 14 et l'autre système étant raccordé au circuit d'alimentation en fluide réducteur 16.


**Revendications**

1. Dispositif de régulation de pression (18), dans un système de pile à combustible (10) comprenant au moins une pile à combustible (12), un circuit (14) d'alimentation de la ou chaque pile à combustible (12) en fluide oxydant, et un circuit (16) d'alimentation de la ou chaque pile à combustible (12) en fluide réducteur, chaque circuit d'alimentation (14, 16) comportant un conduit amont (40, 44) d'arrivée du fluide et au moins un conduit aval (42, 46) de raccordement à une pile à combustible (12), le dispositif de régulation de pression (18) équipant au moins un circuit d'alimentation (14, 16) pour réguler la pression de fluide dans la ou chaque pile à combustible (12), **caractérisé en ce que** le dispositif de régulation de pression (18) comprend une jonction amont (54) reliant fluidiquement le conduit amont (44) d'un premier circuit d'alimentation (14) à une première ligne (50) de pilotage de la pression de fluide et à une deuxième ligne (52) de passage du fluide, la première ligne (50) comportant un premier régulateur de pression (56) disposé entre une portion amont (62) et une portion aval (64) de la première ligne (50), et la deuxième ligne (52) comportant un deuxième régulateur de pression (58) disposé entre une portion amont (66) et une portion aval (68) de la deuxième ligne (52), la portion aval (68) de la deuxième ligne (52) étant raccordée fluidiquement au ou à chaque conduit aval (42) dudit premier circuit d'alimentation (14), et **en ce que** :

   • le dispositif de régulation de pression (18) comprend un capteur (72) de la pression de fluide dans la deuxième ligne (52), en aval du deuxième régulateur de pression (58), et le premier régulateur de pression (56) est propre à réguler la pression dans la portion aval (64) de la première ligne (50) en fonction de la pression au niveau du capteur de pression (72), et **en ce que**
   • le deuxième régulateur de pression (58) est propre à équilibrer la pression dans la portion aval (68) de la deuxième ligne (52) avec une première pression de référence, captée au niveau d'un premier point de captage (98) situé sur la portion aval (64) de la première ligne (50).

2. Dispositif de régulation de pression (18) selon la revendication 1, **caractérisé en ce que** la portion aval (64) de la première ligne (50) est raccordée fluidiquement à la portion aval (68) de la deuxième ligne (52), au niveau d'une jonction aval (70).

3. Dispositif de régulation de pression (18) selon la revendication 2, **caractérisé en ce que** le capteur de pression (72) est adapté pour mesurer la pression de fluide en aval de la jonction aval (70).

4. Dispositif de régulation de pression (18) selon la revendication 2 ou 3, **caractérisé en ce que** la portion aval (64) de la première ligne (50) comprend un dispositif anti-retour (120) pour empêcher une remontée de fluide de la jonction aval (70) vers le premier régulateur de pression (56).

5. Dispositif de régulation de pression (18) selon l'une quelconque des revendications 2 à 4, **caractérisé en ce que** la portion aval (64) de la première ligne (50) comprend un dispositif de réduction de pression (122), pour réduire la pression de fluide entre l'amont et l'aval dudit dispositif (122).

6. Dispositif de régulation de pression (18) selon les revendications 4 et 5 prises ensemble, **caractérisé en ce que** le dispositif de réduction de pression (122) est disposé en amont du dispositif anti-retour (120).

7. Dispositif de régulation de pression (18) selon la revendication 5 ou 6, **caractérisé en ce que** le premier point de captage (98) est placé en amont du dispositif de réduction de pression (122).

8. Dispositif de régulation de pression (18) selon l'une quelconque des revendications précédentes, **caractérisé en ce qu'**il comporte au moins un troisième régulateur de pression (60), pour réguler la pression dans le ou chaque conduit aval (46) du deuxième circuit d'alimentation (16), ledit troisième régulateur de pression (60) étant propre à équilibrer la pression dans le ou chaque conduit aval (46) du deuxième circuit d'alimentation (16) avec une deuxième pression de référence captée au niveau d'un deuxième point de captage (124), situé en aval du deuxième régulateur de pression (58).

9. Dispositif de régulation de pression (18) selon la revendication 8, **caractérisé en ce que** le troisième régulateur de pression (60) est unique et est placé en amont du ou de chaque conduit aval (46) du deuxième circuit d'alimentation (16), le deuxième point de captage (124) étant placé sur la portion aval (68) de la deuxième ligne (52).

10. Dispositif de régulation de pression (18) selon la revendication 8, **caractérisé en ce qu'**il comprend une pluralité de troisièmes régulateurs de pression (60), chaque troisième régulateur de pression (60) étant disposé sur un conduit aval (46) du deuxième circuit d'alimentation (16), chaque deuxième point de captage (124) étant placé sur un conduit aval (42) du premier circuit d'alimentation (14), lesdits conduits aval (42, 46) alimentant la même pile à combustible (12).

**Patentansprüche**

1. Druckregelvorrichtung (18) in einem Brennstoffzellensystem (10), das mindestens eine Brennstoffzelle (12), einen Versorgungskreis (14) für die Versorgung der oder jeder Brennstoffzelle (12) mit Oxidationsfluid und einen Versorgungskreis (16) für die Versorgung der oder jeder Brennstoffzelle (12) mit Reduktionsfluid umfasst, wobei jeder Versorgungskreis (14, 16) eine oberstromige Ankunftsleitung (40, 44) für die Ankunft des Fluids und mindestens eine unterstromige Anschlussleitung (42, 46) für den Anschluss an eine Brennstoffzelle (12) aufweist, wobei die Druckregelvorrichtung (18) mindestens einen Versorgungskreis (14, 16) ausstattet, um den Fluiddruck in der oder jeder Brennstoffzelle (12) zu regeln, **dadurch gekennzeichnet, dass** die Druckregelvorrichtung (18) einen oberstromigen Anschluss (54) umfasst, der die oberstromige Leitung (44) eines ersten Versorgungskreises (14) mit einer ersten Leitung (50) für die Steuerung des Fluiddrucks und einer zweiten Leitung (52) für den Durchgang des Fluids fluidisch verbindet, wobei die erste Leitung (50) einen ersten Druckregler (56) aufweist, der zwischen einem oberstromigen Abschnitt (62) und einem unterstromigen Abschnitt (64) der ersten Leitung (50) angeordnet ist, und die zweite Leitung (52) einen zweiten Druckregler (58) aufweist, der zwischen einem oberstromigen Abschnitt (66) und einem unterstromigen Abschnitt (68) der zweiten Leitung (52) angeordnet ist, wobei der unterstromige Abschnitt (68) der zweiten Leitung (52) mit der oder jeder unterstromigen Leitung (42) des ersten Versorgungskreises (14) fluidisch verbunden ist, und dass:

• die Druckregelvorrichtung (18) einen Drucksensor (72) für die Messung des Fluiddrucks in der zweiten Leitung (52) nach dem zweiten Druckregler (58) umfasst und der erste Druckregler (56) imstande ist, den Druck im unterstromigen Abschnitt (64) der ersten Leitung (50) in Abhängigkeit vom Druck auf Ebene des Drucksensor (72) zu regeln, und dass

• der zweite Druckregler (58) imstande ist, den Druck im unterstromigen Abschnitt (68) der zweiten Leitung (52) mit einem ersten Referenzdruck auszugleichen, der auf Ebene eines ersten Messpunkts (98) im unterstromigen Abschnitt (64) der ersten Leitung (50) gemessen wird.

2. Druckregelvorrichtung (18) nach Anspruch 1, **dadurch gekennzeichnet, dass** der unterstromige Abschnitt (64) der ersten Leitung (50) mit dem unterstromigen Abschnitt (68) der zweiten Leitung (52) auf Ebene eines unterstromigen Anschlusses (70) fluidisch verbunden ist.

3. Druckregelvorrichtung (18) nach Anspruch 2, **dadurch gekennzeichnet, dass** der Drucksensor (72) zum Messen des Fluiddrucks nach dem unterstromigen Anschluss (70) ausgebildet ist.

4. Druckregelvorrichtung (18) nach Anspruch 2 oder 3, **dadurch gekennzeichnet, dass** der unterstromige Abschnitt (64) der ersten Leitung (50) eine Anti-Rücklauf-Vorrichtung (120) umfasst, um ein Zurückfließen von Fluid vom unterstromigen Anschluss (70) zum ersten Druckregler (56) zu verhindern.

5. Druckregelvorrichtung (18) nach einem der Ansprüche 2 bis 4, **dadurch gekennzeichnet, dass** der unterstromige Abschnitt (64) der ersten Leitung (50) eine Druckreduziervorrichtung (122) umfasst, um den Fluiddruck zwischen dem Oberlauf und dem Unterlauf der Vorrichtung (122) zu reduzieren.

6. Druckregelvorrichtung (18) nach den gemeinsam herangezogenen Ansprüchen 4 und 5, **dadurch gekennzeichnet, dass** die Druckreduziervorrichtung (122) vor der Anti-Rücklauf-Vorrichtung (120) angeordnet ist.

7. Druckregelvorrichtung (18) nach Anspruch 5 oder 6, **dadurch gekennzeichnet, dass** der erste Messpunkt (98) vor der Druckreduziervorrichtung (122) angeordnet ist

8. Druckregelvorrichtung (18) nach einem der vorangehenden Ansprüche, **dadurch gekennzeichnet, dass** sie mindestens einen dritten Druckregler (60) aufweist, um den Druck in der oder jeder unterstromigen Leitung (46) des zweiten Versorgungskreises (16) zu regeln, wobei der dritte Druckregler (60) imstande ist, den Druck in der oder jeder unterstromigen Leitung (46) des zweiten Versorgungskreises (16) mit einem zweiten Referenzdruck auszugleichen, der auf Ebene eines zweiten Messpunkts (124) nach dem zweiten Druckregler (58) gemessen wird.

**9.** Druckregelvorrichtung (18) nach Anspruch 8, **dadurch gekennzeichnet, dass** der dritte Druckregler (60) einzig ist und vor der oder jeder unterstromigen Leitung (46) des zweiten Versorgungskreises (16) angeordnet ist, wobei der zweite Messpunkt (124) im unterstromigen Abschnitt (68) der zweiten Leitung (52) platziert ist.

**10.** Druckregelvorrichtung (18) nach Anspruch 8, **dadurch gekennzeichnet, dass** sie eine Vielzahl dritter Druckregler (60) umfasst, wobei jeder dritte Druckregler (60) auf einer unterstromigen Leitung (46) des zweiten Versorgungskreises (16) angeordnet ist, wobei jeder zweite Messpunkt (124) auf einer unterstromigen Leitung (42) des ersten Versorgungskreises (14) platziert ist, wobei die unterstromigen Leitungen (42, 46) dieselbe Brennstoffzelle (12) versorgen.

**Claims**

**1.** A pressure-regulating device (18) in a system of fuel-cell stacks (10) comprising at least one fuel-cell stack (12), a circuit (14) for supplying each fuel-cell stack (12) with an oxidizing fluid, and a circuit (16) for supplying of the or each fuel-cell stack (12) with a reducing fluid, each supply circuit (14, 16) including an upstream channel (40, 44) delivering fluid and at least one downstream channel (42, 46) for connecting to a fuel-cell stack (12), the pressure-regulating device (18) equipping at least one supply circuit (14, 16) to regulate the fluid pressure in the or each fuel-cell stack (12), **characterized in that** the pressure-regulating device (18) comprises an upstream junction (54) fluidly connecting the upstream channel (44) of a first supply circuit (14) to a first line (50) for controlling the fluid pressure and a second line (52) for passing the fluid, the first line (50) including a first pressure regulator (56) positioned between an upstream portion (62) and a downstream portion (64) of the first line (50), and the second line (52) including a second pressure regulator (58) positioned between an upstream portion (66) and a downstream portion (68) of the second line (52), the downstream portion (68) of the second line (52) being fluidly connected to the or each downstream channel (42) of said first supply circuit (14), and **in that**:

• the pressure-regulating device (18) comprises a sensor (72) measuring the fluid pressure in the second line (52), downstream from the second pressure regulator (58), and the first pressure regulator (56) is capable of regulating the pressure in the downstream portion (64) of the first line (50) as a function of the pressure at the pressure sensor (72), and **in that**
• the second pressure regulator (58) is capable of matching the pressure in the downstream portion (68) of the second line (52) to a reference pressure, measured at a first measuring point (98) in the downstream portion (64) of the first line (50).

**2.** The pressure-regulating device (18) according to claim 1, **characterized in that** the downstream portion (64) of the first line (50) is fluidly connected to the downstream portion (68) of the second line (52), at a downstream junction (70).

**3.** The pressure-regulating device (18) according to claim 2, **characterized in that** the pressure sensor (72) is capable of measuring the fluid pressure downstream from the downstream junction (70).

**4.** The pressure-regulating device (18) according to claim 2 or 3, **characterized in that** the downstream portion (64) of the first line (50) comprises a non-return device (120) for preventing fluid from rising from the downstream junction (70) toward the first pressure regulator (56).

**5.** The pressure-regulating device (18) according to any one of claims 2 to 4, **characterized in that** the downstream portion (64) of the first line (50) comprises a pressure-reducing device (122), to reduce the fluid pressure between the upstream and downstream of said device (122).

**6.** The pressure-regulating device (18) according to claims 4 and 5 together, **characterized in that** the pressure-reducing device (122) is positioned upstream from the non-return device (120).

**7.** The pressure-regulating device (18) according to claim 5 or 6, **characterized in that** the first measuring point (98) is placed upstream from the pressure-reducing device (122).

**8.** The pressure-regulating device (18) according to any one of the preceding claims, **characterized in that** it includes at least one third pressure regulator (60), to regulate the pressure in the or each downstream channel (46) of the second supply circuit (16), said third pressure regulator (60) being capable of matching the pressure in the or each downstream channel (46) of the second supply circuit (16) to a second reference pressure measured at a second measuring point (124), situated downstream from the second pressure regulator (58).

**9.** The pressure-regulating device (18) according to claim 8, **characterized in that** there is only one third pressure regulator (60), which is placed upstream from the or each downstream channel (46) of the second supply circuit (16), the second measuring point (124) being placed on the downstream portion (68) of the second line (52).

10. The pressure-regulating device (18) according to claim 8, **characterized in that** it comprises a plurality of third pressure regulators (60), each third pressure regulator (60) being positioned on a downstream channel (46) of the second supply circuit (16), each second measuring point (124) being placed on a downstream channel (42) of the first supply circuit (14), said downstream channels (42, 46) supplying the same fuel-cell stack (12).

FIG.1

**FIG.2**

56

96  92

90

_FIG.3_

88

94

86

84

80

82

118

106

58

114

112

102

104

116

108  110

100

_FIG.4_

**FIG.5**

EP 2 664 020 B1

**EP 2 664 020 B1**

**RÉFÉRENCES CITÉES DANS LA DESCRIPTION**

**Documents brevets cités dans la description**

- US 20040081864 A